# EUROPEAN PATENT APPLICATION

(11) **EP 3 485 866 A1**
(43) Date of publication of application: **22.05.2019**
(21) Application number: 18206759.5
(22) Date of filing: 16.11.2018
(51) Int. Cl.: A61H 19/00, A61H 23/02, A61C 17/22, A61C 17/34

(54) **ACCESSORY FOR AN ELECTRIC TOOTHBRUSH**

(30) Priority: 16.11.2017 ZA 201707756
(71) Applicant: Undercover Group (Pty) Ltd, 7708 Claremont (ZA)
(72) Inventor: Phillips Gird, Heidi Stella, 7708 Claremont (ZA)
(74) Representative: Martegani, Franco

(57) **Abstract**

An accessory (10) for an electric toothbrush head (18) includes a body (12) in which the shank (22) of the toothbrush head (18) is receivable, and a cap (14) that can lock to hold the toothbrush head (18) captive in the body. The accessory (10) includes a second receiving formation that can be a rotor (16) or can be integrally formed with the body (12). The second receiving formation has a recess (52) in which the bristle part (20) is receivable to transfer oscillating movement to the accessory (10), so that the at least part of the accessory (10) gently vibrates and can be used as a massager.

## Description

### FIELD OF THE INVENTION

This invention relates to accessories for electric toothbrushes, that serve as covers for the toothbrush heads and also allows a toothbrush to be used as an erotic message device.

### BACKGROUND TO THE INVENTION

There is often a wish for erotic message devices such as clitoral stimulators, vibrators, massagers, or the like, but some users fear that they may be embarrassed for having such devices.

Electric toothbrushes are commonly used for purposes of dental hygiene, but the bristles are typically exposed to contamination if not covered, e.g. if the toothbrush is stored with other toiletries.

The present invention seeks to provide an erotic message device that is discreet, effective and cost-effective. The invention also seeks to provide hygienic protection for the bristles of electric toothbrushes.

### SUMMARY OF THE INVENTION

According to the present invention there is provided an accessory for an electric toothbrush of the type with a bristle part that moves relative to a head of the toothbrush in use, said accessory comprising:
a body that defines at least a first receiving formation in which at least part of the head of the toothbrush is receivable;
a lock formation that is displaceable relative to the body between a lock position in which it holds at least part of the toothbrush head captive in the first receiving formation, and a free position in which the toothbrush head can be withdrawn from the first receiving formation; and
a second receiving formation defining a recess in which at least part of the bristle part of the toothbrush is receivable when the toothbrush head is received in the first receiving formation, said second receiving formation being configured to transfer movement from the bristle part to the accessory

The term "head", when used herein in relation to the electric toothbrushes, includes the narrower shank or neck of the toothbrush, but excludes the bristle carrier and bristles. The "bristle part" includes the bristles and bristle carrier.

The second receiving formation may be a rotor that is movably supported by the body, and the rotor may be configured to transfer movement from the bristle part to the rotor, to oscillate the rotor relative to the body.

Instead, the second receiving formation may be integrally formed with the body.

The second receiving formation may include one or more engagement formations that extend into the recess and the engagement formations may be receivable between the bristles.

### BRIEF DESCRIPTION OF THE DRAWINGS

For a better understanding of the present invention, and to show how it may be put into effect, the invention will now be described by way of non-limiting example, with reference to the accompanying drawings in which:
Figure 1 shows a top three-dimensional view of a first embodiment of a toothbrush accessory according to the present invention in a closed condition;
Figure 2 shows a side view of the toothbrush accessory of Figure 1;
Figure 3 shows a top three-dimensional view of the toothbrush accessory of Figure 1 in an open condition, attached to a toothbrush head;
Figure 4 shows a top three-dimensional view of a body of the toothbrush accessory of Figure 1;
Figures 5 and 6 show bottom and top three-dimensional views, respectively, of a cap of the toothbrush accessory of Figure 1;
Figure 7 shows a three-dimensional view of a rotor of the toothbrush accessory of Figure 1;
Figure 8 shows a sectional side view of the toothbrush accessory of Figure 1, in a closed condition, when not in use;
Figure 9 shows a sectional side view of the toothbrush accessory of Figure 1, in a closed condition, in use;
Figure 10 shows a top three-dimensional view of a second embodiment of a toothbrush accessory according to the present invention in a closed condition;
Figure 11 shows a side view of the toothbrush accessory of Figure 10, in the closed condition, in use;
Figure 12 shows a top view of the toothbrush accessory of Figure 10 in the closed condition, not in use;
Figure 13 shows a top three-dimensional view of the toothbrush accessory of Figure 10 in an open condition, not in use;
Figure 14 shows a top three-dimensional view of a body and rotor of the toothbrush accessory of Figure 10;
Figures 15 shows an end view of the toothbrush accessory of Figure 10, in a closed condition, in use;
Figure 16 shows a bottom three-dimensional view of the cap of the toothbrush accessory of Figure 10;
Figure 17 shows a sectional side view of the toothbrush accessory of Figure 10, in a closed condition, when not in use;
Figure 18 shows a sectional side view of the toothbrush accessory of Figure 10, in a closed condition, in use;
Figure 19 shows a top three-dimensional view of a body of a third embodiment of a toothbrush accessory according to the present invention;
Figure 20 shows a sectional side view of the body of the toothbrush accessory of Figure 19;
Figure 21 shows a top three-dimensional view of a body of a fourth embodiment of a toothbrush accessory according to the present invention;
Figure 22 shows a sectional side view of the body of the toothbrush accessory of Figure 21.

### DETAILED DESCRIPTION OF THE DRAWINGS

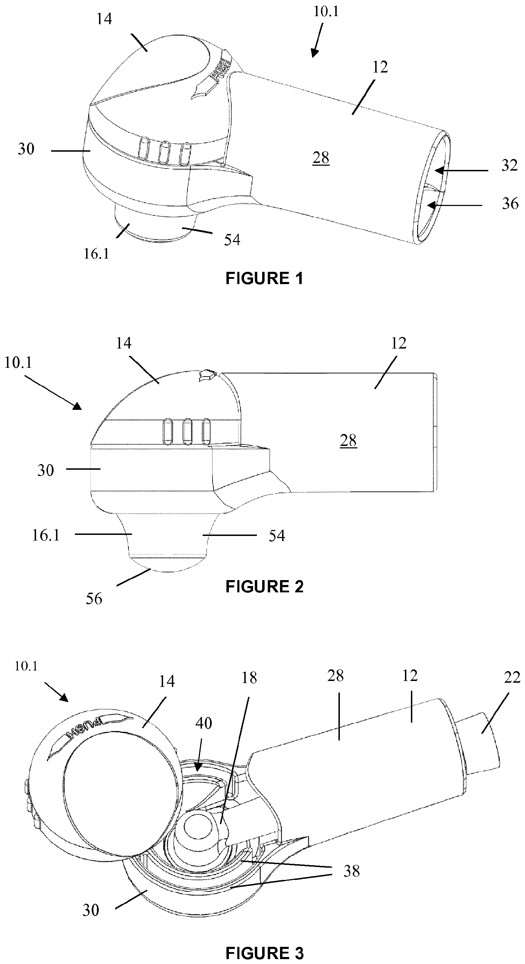

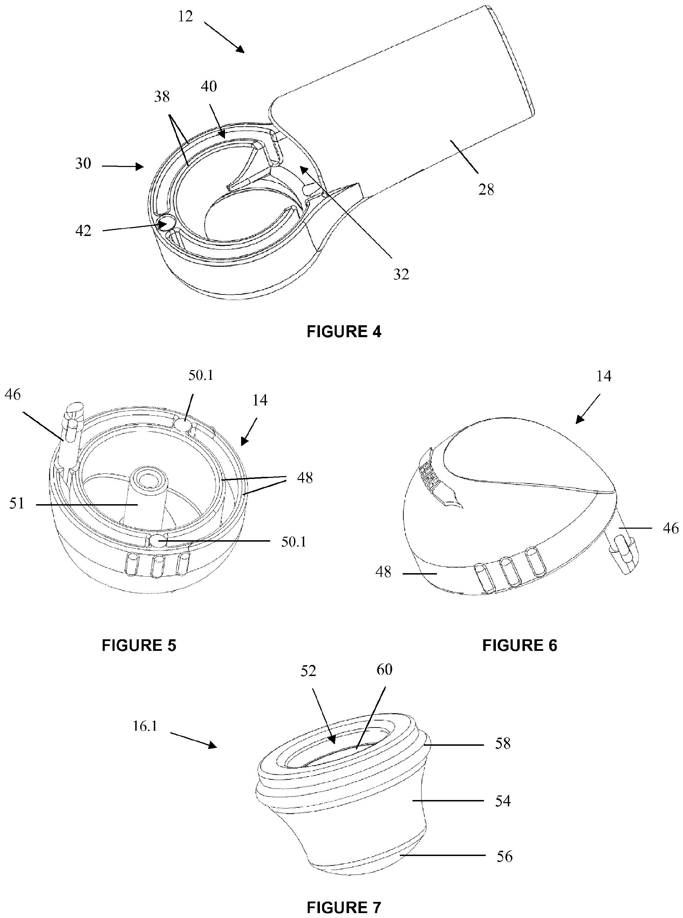

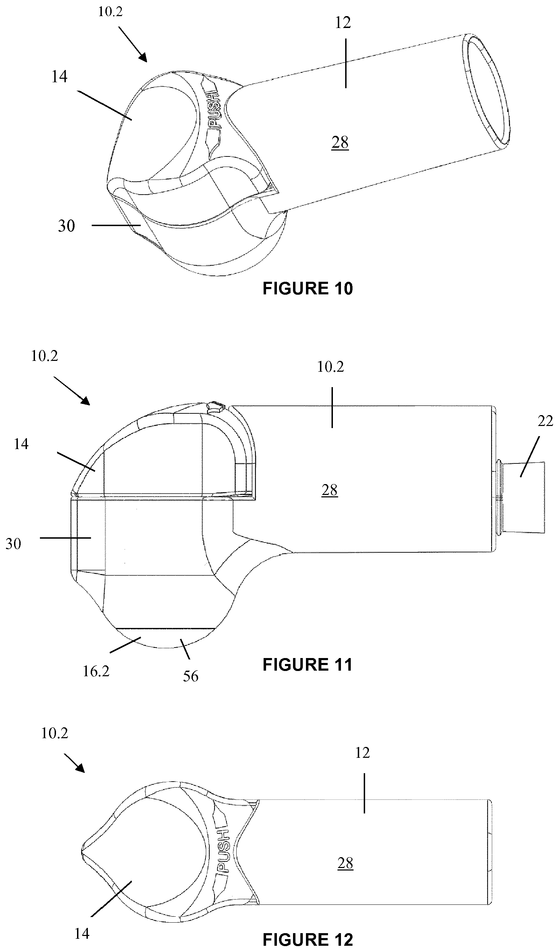

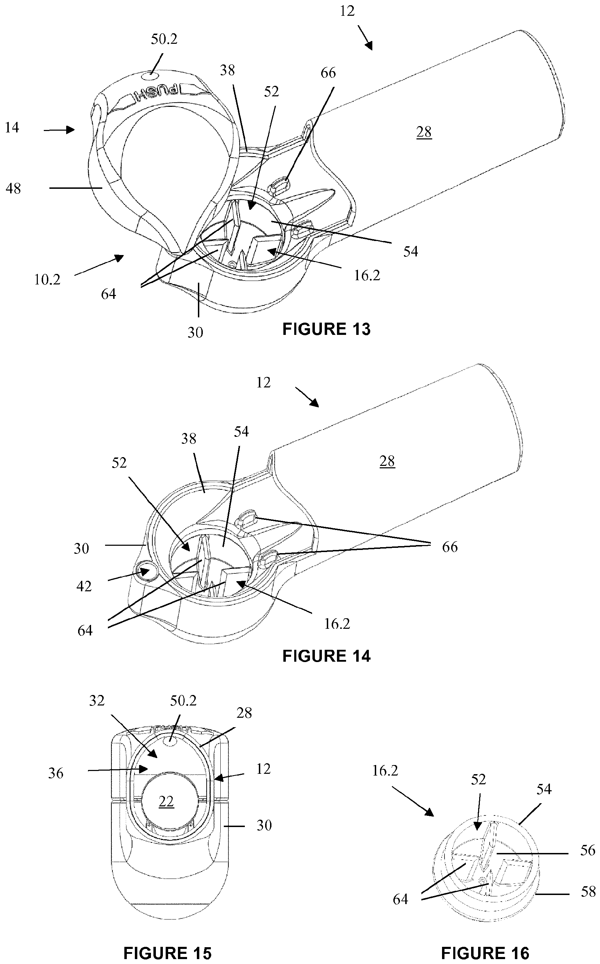

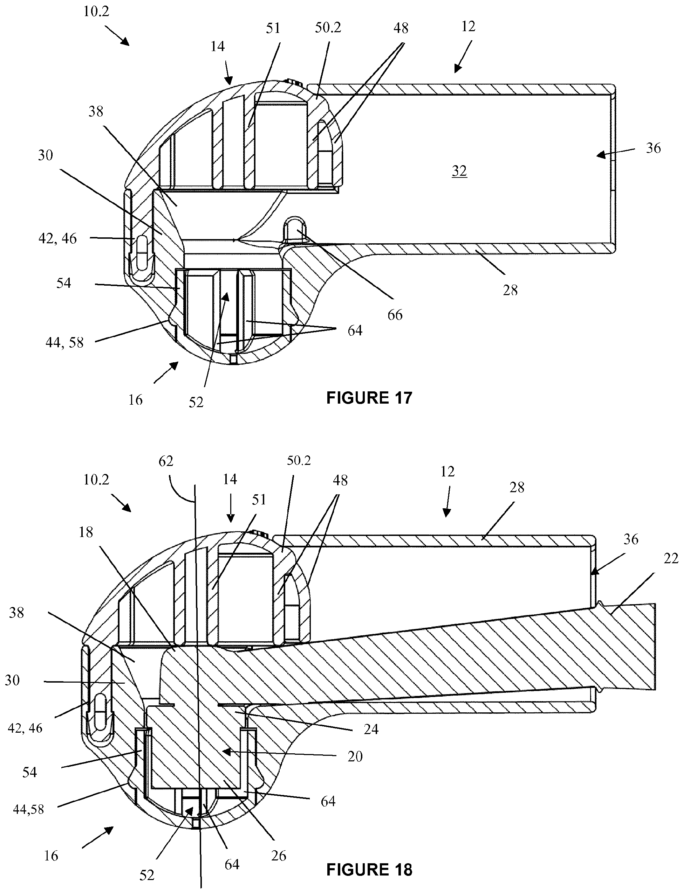

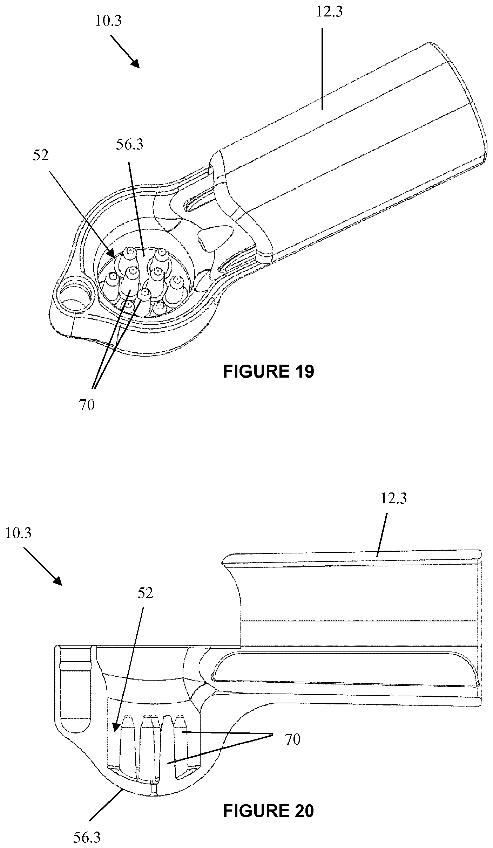

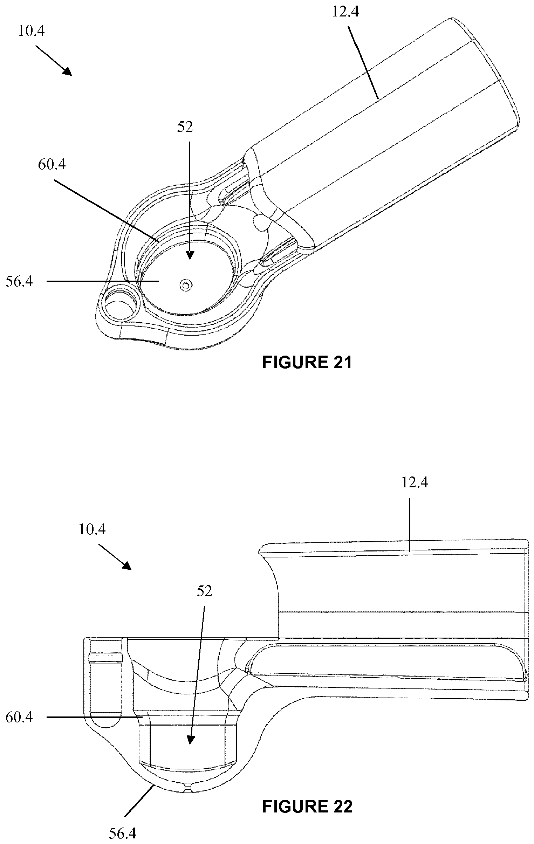

Referring to the drawings, a toothbrush accessory according to the present invention, is generally identified by reference number 10 and is referred to as "device", for brevity. The same reference numbers are used to identify features that are common to different embodiments of the device, even though slight variations appear between the embodiments - as described below and where necessary, suffixes are used in reference numbers, to identify the different embodiments of the invention. Figures 1 to 9 show a first embodiment 10.1 of the device, Figures 10 to 18 show a second embodiment 10.2 of the device, Figures 19 and 20 show a third embodiment 10.3 of the device, and Figures 21 and 22 show a fourth embodiment 10.4 of the device.

Referring to Figures 1 to 9, the device 10.1 comprises of a body 12, a lock formation in the form of a cap 14 that can pivot relative to the body, and a rotor 16.1 that can rotate relative to the body. The device 10.1 is intended for use with an electric toothbrush and more particularly, with a head 18 and bristle part 20 of the toothbrush. The head 18 includes a shank 22 and is stationary relative to the toothbrush handle, in use, whereas the bristle part 20 includes a bristle carrier 24, which is a disc in the illustrated embodiments, and bristles 26 that protrude from the bristle carrier. During normal use of the toothbrush, the bristle part 20 oscillates relative to the head 18, about an axis that extends transversely to the shank 22.

The body 12 comprises a hollow sheath 28 and a ring formation 30 at one end of the sheath. Inside the sheath 28, there is a cavity 34 through which the remote end of the toothbrush head 18 (with the bristle part 20) can pass. Inside, the bottom of the cavity 32 forms a first receiving formation that is shaped complementally to the shank 22 of the toothbrush, including a rib 34 near the opening 36 of the body 12, which defines a recess that is complementary to the shank 22, to receive the shank in cradle-fashion and which assists in holding the toothbrush head in position.

The ring formation 30 includes two concentric truncated cylindrical walls 38 at its top, which define an annular cavity 40 between them, that extends partly around the ring formation, but not along the part of the ring formation adjacent the cavity 32. The annular cavity 40 is also disrupted at the end of the ring formation 30 that is furthest from the sheath 28, where a cylindrical recess 42 is formed between the walls 38. The bottom of the ring formation 30 is of a solid construction (not double-walled) and defines a circumferential groove 44 that extends along its inside. The inside of the inner wall 38 has a tapered shape, to guide the bristles 26 into the rotor (see below).

The cap 14 is generally dome-shaped, but slightly flattened on top towards a remote end of the device 10. A pin 46 extends from the an underside of the cap 14 and is receivable in the recess 42 of the ring formation 30, to be held captive in the recess in clipping-fashion, or the like, and to rotate inside the recess, so that the cap can rotate relative to the body 12 about the pin and recess. The cap 14 has double-walls 48, similar to the ring formation 30, and two rounded studs 50.1 protrude from the underside of the walls 48. A hollow spigot 51 extends centrally inside the dome and its free end is generally flush with the undersides of the walls 48.

When the pin 46 is received in the recess 42, the cap 14 can pivot relative to the body 12 between a closed position in which the circumference of the cap is generally aligned with the circumference of the ring formation 30, and an open position in which the cap is generally clear of the top of the ring formation. The two studs 50.1 are received in the top of the cavity 40 in clipping fashion when the cap is in its closed position, to hold the cap in position, but the cap can be pivoted to its open position by hand with a force that is comfortable, although firm.

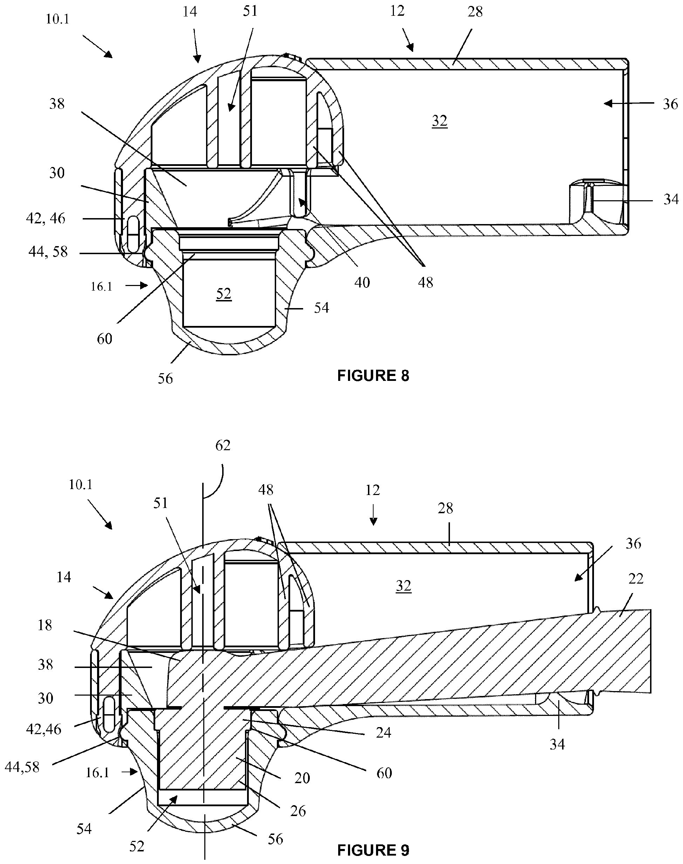

The rotor 16.1 is a second receiving formation of the device 10.1 and is hollow, defining an internal recess 52, surrounded by a wall 54 that is generally cylindrical on its inside, but frusto-conical on its outside, with a dome 56 at its lower end. Around an upper circumference of the wall 54, the rotor 16 has a circumferential ridge 58 that is receivable in the groove 44 of the ring formation 30. When the rotor 16.1 is attached to the ring formation 30 with the ridge 58 in the groove 44, the rotor can rotate relative to the ring with the ridge 58 sliding in the groove 44. The rotation of the rotor 16.1 relative to the body 12 takes place about an axis 62 that extends transversely to the sheath 28, as shown in Figure 9.

In use, to fit the device 10 on a toothbrush head 18, the cap 14 is pivoted to its open position and the and the head is inserted into the sheath 28 from the opening 36 until the bristle part 20 protrudes from the sheath and can be received in the recess 52 of the rotor 16.1 as shown in Figure 3. The cap 14 is pivoted to its closed position and when in its closed position, the walls 48 and spigot 51 of the cap press the toothbrush head downwards, urging the shank 22 into contact with the bottom of the cavity and holding it captive. While the toothbrush head 18 is held captive in the body 12 by the cap 14, the bristle part 20 is received inside the recess 52 and the bristle carrier 24 is preferably urged into abutment with a circumferential shoulder 60 formed on the inside of the wall 54.

While the device 10.1 remains fitted on the toothbrush head 18, it serves as a hygienic cover for the toothbrush head, protecting the toothbrush head, particularly the bristles 26, against contamination. When the toothbrush is required for brushing teeth, the cap 14 is pivoted to its free position, the bristle part 20 is withdrawn from the recess 52 and the toothbrush head 18 is withdrawn through the sheath 28 and out of the opening 36. While the device 10.1 is thus used as a cover for the toothbrush head 18, it is unlikely to cause any suspicion of the additional function of the device, of serving as an erotic massager.

While the device 10.1 is fitted on the toothbrush head 18 as described above, the device can be used as a massager by switching on the electric toothbrush, which causes the bristle part 20 to oscillate relative to the toothbrush head and given the position of the bristle part in the recess 52, the axis about which the bristle part oscillates, coincides with the rotational axis 62 of the rotor 16.1. The oscillatory motion of the bristle part 20 is transferred to the insides of the wall 54 by the bristles 26 and by the abutting contact between the bristle carrier 24 and the shoulder 60, so that the rotor 16.1 also oscillates relative to the body 12.

The oscillation of the bristle part 20 and rotor 16.1 is typically so rapid, that tactile contact with the rotor is experienced as a gentle vibration and the rotor, especially the dome 56 can be used to massage the human body, especially in erogenous zones. The effectiveness of the massaging effect is enhanced further if the bristle part 20 is moved with more complexity relative to the toothbrush head, e.g. if the bristle part also reciprocates in opposing directions along the axis 62 in a pulsing motion.

Referring to Figures 10 to 18, the second embodiment of a device 10.2 according to the invention, also comprises a body 12, cap 14 and rotor 16.2 that function practically the same as their counterparts in the first embodiment described above with reference to Figures 1 to 9, although the parts of the second embodiment of the device 10.2 are more streamlined in shape than those of the first embodiment of the device 10.1, making the second embodiment of the device 10.2 more compact and giving it a more pleasing appearance.

One significant practical difference between the two embodiments of the device, is that the rotor 16.2 in the second embodiment of the device 10.2 includes four engagement formations in the form of webs 64 that extend upwards from the dome 56 inside the recess 52. The webs 64 are received between the bristles 26 and assist in the transfer of oscillations from the bristle part 20 to the rotor 16.2.

Further differences between the embodiments, are that the ring formation 30 of the device 10.2 has only a single wall 38, the cap 14 is held in position by a single stud 50.2 that is receivable in the remote end of the cavity 32. The shank 22 is held in position inside the cavity 32 by two protuberances 66, rather than a rib inside the cavity, the cap 14 can rotate through 360 degrees, and the cap has a breathing hole 68.

Referring to Figures 19 and 20, in the third embodiment of the invention, the body 12.3 is integrally formed with a part that serves as the second receiving formation and includes a dome 56.3 that extends around the recess 52, with the same general shape as the rotor shown in Figures 10-18. The device 10.3 does not have a rotor and also does not have flanges extending into the recess 52, but instead has pins 70 that can extend between the bristles of the toothbrush head.

In use, the toothbrush head is received in the device 10.3 as described above with reference to the first two embodiments of the invention, except that the pins 70 are received between the bristles. The device 10.3 can protect the bristles and can be removed to use the toothbrush for brushing teeth, but while the device is fitted on the toothbrush head, it can also be used as a massager, similarly to the first two embodiments of the invention. However, when the bristle part oscillates, the oscillations are transferred from the bristles to the pins 70, which cause the body 12.3 to vibrate so that that tactile contact with the body, particularly the dome 56.3, is experienced as a gentle vibration and the dome can be used to massage the human body, especially in erogenous zones.

Referring to Figures 21 and 22, in the fourth embodiment of the invention, the body 12.4 is also integrally formed with a part that serves as the second receiving formation and includes a dome 56.4 that extends around the recess 52 - as described with reference to Figures 19 and 20.

The device 10.4 does not have protuberances such as flanges or pins extending into the recess 52. However, the recess 52 and a shoulder 60.4 that extends around the recess, are not round, but has an elongated shape, so that it is oval or elliptical.

The device 10.4 can be used in the same way as the device shown in Figures 19 and 20, except that it is intended for toothbrush heads with elongated bristle carriers, i.e. bristle carriers with oval or elliptical shapes that complement the shape of the shoulder 60.4. When the device 10.4 is fitted on the toothbrush head, the periphery of the bristle carrier engages the shoulder 60.4 and when the toothbrush head oscillates, the oscillations are transferred from the bristle carrier to the shoulder and therefore to the whole body 12.4, including the dome 56.4. This causes the body 12.4 to vibrate so that that tactile contact with the dome 56.4, is experienced as a gentle vibration that can be used to massage the human body, especially in erogenous zones.

## Claims

1. An accessory for an electric toothbrush having a bristle part that moves relative to a head of the toothbrush in use, said accessory comprising:
a body that defines at least a first receiving formation in which at least part of the head of the toothbrush is receivable;
a lock formation that is displaceable relative to the body between a lock position in which it holds at least part of the toothbrush head captive in the first receiving formation, and a free position in which the toothbrush head can be withdrawn from the first receiving formation; and
a second receiving formation defining a recess in which at least part of the bristle part of the toothbrush is receivable when the toothbrush head is received in the first receiving formation, said second receiving formation being configured to transfer movement from the bristle part to the accessory.

2. An accessory according to claim 1, wherein the second receiving formation is a rotor that is movably supported by the body, said rotor being configured to transfer movement from the bristle part to the rotor, to oscillate the rotor relative to the body.

3. An accessory according to claim 1, wherein the second receiving formation is integrally formed with the body.

4. An accessory according to any one of the preceding claims, wherein the second receiving formation includes at least one engagement formation that extends into the recess.

5. An accessory according to claim 4, wherein said engagement formation is receivable between the bristles.
